# EUROPEAN PATENT SPECIFICATION

(11) **EP 3 784 020 B1**
(45) Date of publication and mention of the grant of the patent: **15.02.2023**
(21) Application number: 19720087.6
(22) Date of filing: 18.04.2019
(51) Int. Cl.: A01F 15/07, A01F 21/00

(54) **BALE WRAPPER**
BALLENWICKLER
ENRUBANNEUSE DE BALLES

(30) Priority: 31.05.2018 GB 201808866
(43) Date of publication of application: 03.03.2021
(73) Proprietor: Kuhn-Geldrop B.V., 5667 KP Geldrop (NL)
(72) Inventor: VAN AMSTEL, Leonardus Hendrikus Maria, 5663 Geldrop (NL); BAX, Johannes Franciscus Wilhelmus, 6021 Budel (NL)
(74) Representative: Murgitroyd & Company
(86) International application number: PCT/EP2019/060079
(87) International publication number: WO 2019/228707

(56) References cited:
- EP-A1- 3 123 856
- DE-A1-102014 016 498
- US-A1- 2009 249 746

## Description

The present invention relates to a bale wrapper that applies a stretch film wrapping to the outer surface of an agricultural bale. The present invention also relates to a method of operating a bale wrapper.

The bale wrapper may be either an independently operated machine (which carries out bale wrapping only), or it may be part of a combined baler/wrapper machine.

It is well known to apply a stretch film wrapping to an agricultural bale, in order to protect the contents of the bale from the weather and, in the case of silage crops, to form a substantially airtight and watertight enclosure within which the crop can mature or ferment to form silage.

The bale can be either cylindrical (called a "round" bale) or it can be a parallelepiped (called a "rectangular" or "square" bale). In either case, the bale is generally wrapped by rotating the bale around a horizontal axis while at the same time providing relative rotation about a vertical axis between the bale and a dispenser of the wrapping film. This produces a series of overlapping film layers, which cover the entire outer surface of the bale to form an airtight and watertight enclosure. Generally, multiple layers of film are applied to increase the puncture-resistance of the wrapping and improve its airtight properties.

There are two main types of bale wrapper in common usage, which are illustrated for example in Figures 5 and 6 of US 5,327,706. Figure 5 of US 5,327,706 illustrates a satellite-type bale wrapper in which the bale is rotated about a horizontal axis while at least one film dispenser mounted on a wrapper arm rotates around the bale about a vertical axis. Figure 6 of US 5,327,706 illustrates a turntable-type bale wrapper in which the bale is located on a turntable that rotates about a vertical axis while at the same time rotating the bale about a horizontal axis, thereby applying film to the outer surface of the bale from a stationary film dispenser.

The present invention is concerned with bale wrappers of the satellite-type, in which at least one film dispenser is mounted on a wrapper arm and rotates around the bale about a vertical axis.

In a satellite-type bale wrapper the bale is placed on a support structure that generally includes either a set of belts or at least two parallel horizontally-placed rollers. The belts or rollers are driven, causing the bale to rotate about a horizontal axis. The bale wrapper also includes at least one film dispenser that is mounted on a wrapper arm, which is configured to rotate about a vertical axis around the support structure. Usually, two film dispensers are provided, which are mounted on separate wrapper arms.

In operation, a bale is placed on the support structure and the belts or rollers are driven causing the bale to rotate about a substantially horizontal axis. The (or each) wrapper arm carrying the film dispenser is simultaneously driven for rotation about the vertical rotation axis. As the bale and the film dispenser rotate about their respective axes, wrapping film is drawn from the film dispenser onto the bale producing a series of overlapping layers that cover the surface of the bale. At the end of the wrapping cycle, the length of wrapping film between the film dispenser and the bale is grabbed and severed by a film cutter device and the wrapped bale is then deposited on the ground, allowing a new bale to be wrapped.

During a bale wrapping operation the wrapper arm rotates at high speed around the bale. The film dispenser is heavy and could potentially cause serious injury to any person or animal with which it collides, or damage to an object or the bale wrapper. To guard against this risk, many bale wrappers are provided with a safety system comprising an obstruction sensor, for example a lightweight trigger arm or a non-contact obstruction sensor (for example that uses a beam of light), which is mounted in front of the wrapper arm so that as the film dispenser rotates, the obstruction sensor and the film dispenser follow the same rotary path, with the obstruction sensor leading the film dispenser, usually by a distance of about 70cm. If the obstruction sensor senses an obstruction it activates a braking mechanism that halts rotation of the wrapper arm before the film dispenser reaches the position of the obstruction, thus preventing the film dispenser from colliding with the obstruction and reducing the risk of damage or injury. If the obstruction sensor comprises a mechanical trigger arm, it pivots relative to the wrapper arm so that it does not transfer motion to the obstruction.

The distance that the rotating wrapper arm travels after the brake has been triggered (i.e. the stopping distance) depends on the kinetic energy of the rotating parts, which in turn depends on the mass and the rotational speed of the rotating parts. However, to avoid colliding with an obstruction, the film dispenser must be brought to a stop before it reaches the position of the obstruction. In practice this means that the wrapper arm must be stopped within a stopping distance that is no greater than the distance by which obstruction sensor leads the wrapper arm (usually about 70cm).

The stopping distance will be a maximum when the mass of the film dispenser is greatest: i.e. when the wrapper arm is carrying a full roll of film. As the film is used up during bale wrapping, the mass of the roll will decrease and so the stopping distance will also decrease. The operational speed of the rotating wrapper arm must therefore be selected to ensure that stopping distance is no greater than the distance by which obstruction sensor leads the wrapper arm when the arm is carrying a full film roll. This is turn limits the speed at which the bale wrapper can operate.

Typically, the mass of a film roll is about 27kg. However, larger film rolls have recently been introduced, which have a mass of 30-35kg. To ensure that the wrapper arm can be stopped within a safe stopping distance, the bale wrapper must be operated at a reduced speed, which increases the time needed to wrap a bale. This is inefficient and can cause delays, particularly when the bale wrapper is part of a combined baler-wrapper machine.

DE 102014016498 A1 in which a baler-wrapper with the features of the preamble of claim 1 and the preamble of claim 12 is disclosed, describes a combined baler-wrapper in which the rotational speed of the wrapper arms is adjusted according to the travel speed of a tractor that tows the baler-wrapper. When the baler-wrapper is stationary the rotational speed of the wrapper arms is reduced, to minimize the risk of injury to a driver who might have left the cab of the tractor.

As the travel speed increases the speed of the wrapper arms is increased to provide an increased rate of bale production. However, with a larger film roll the rotational speed would have to be reduced further to maintain a safe stopping distance.

EP 2016688 A1 describes a bale wrapper that includes a proximity sensor for sensing a person or obstacle in the vicinity of the bale wrapper. If a person or obstacle is detected within a detection zone in the vicinity of the bale wrapper the rotational speed of the wrapper arms is reduced, to minimize the risk of injury or damage to a driver or obstacle who collides with the rotating parts of the bale wrapper. However, with a larger film roll the rotational speed would again have to be reduced further to maintain a safe stopping distance.

CA 2959894 A1 describes an emergency stop for a bale wrapper, in which the position of a trigger arm for activating an emergency stop mechanism is adjusted as the rotational speed of the wrapper arms changes, to allow an increased stopping distance at higher rotational speeds. However, the arrangement is mechanically complex and no account is taken of the size of the film roll.

It is an object of the present invention to provide a bale wrapper that mitigates at least some of the aforesaid disadvantages.

An objective technical problem addressed by embodiments of the present invention is to allow the use of larger film rolls without compromising safety. Another objective technical problem is to provide faster bale wrapping without compromising safety. Another objective technical problem is to adapt the speed of the bale wrapper to the mass of the film roll. According to one aspect of the present invention there is provided a bale wrapper comprising a film dispenser that carries a quantity of film and is mounted for rotation about a first axis, a drive mechanism for driving rotation of the film dispenser, an obstruction sensor configured to halt rotation of the film dispenser if it senses an obstruction in the path of the film dispenser, and a control system that controls the drive mechanism to adjust the rotational speed of the film dispenser, characterised in that the control system is configured to adjust the rotational speed of the film dispenser according to the quantity of film carried by the film dispenser.

The provision of a control system that adjusts the rotational speed of the film dispenser according to the quantity of film carried by the film dispenser allows the speed to be adapted to the mass of the film dispenser, ensuring that rotation of the film dispenser can be halted within a safe stopping distance if an obstruction is encountered. This means for example that the speed can be reduced when the quantity of film carried is high to ensure a safe stopping distance, but can be safely increased when a lower quantity of film is being carried, allowing for faster bale wrapping and greater efficiency.

Embodiments of the present invention therefore solve one or more of the objective technical problems set out above. Specifically, embodiments of the present invention allow the use of larger film rolls without compromising safety, and/or provide faster bale wrapping without compromising safety, and/or allow the speed of the bale wrapper to be adapted to the mass of the film roll.

In an embodiment, the control system includes a sensor configured to sense the quantity of film carried by the film dispenser.

In one embodiment, the sensor is configured to sense the quantity of film carried by the film dispenser by sensing the mass of the film carried by the film dispenser. The mass of the film can be determined for example by sensing the weight of the film roll or the total weight of the film dispenser including the film roll, or by sensing a centrifugal force acting on the film dispenser as it rotates, for example by using a strain gauge.

In another embodiment, the sensor is configured to sense the quantity of film carried by the film dispenser by sensing the size of a film roll carried by the film dispenser. For example, the sensor may sense the diameter or the radius of the film roll. The sensor may include a contact element that contacts a surface of the film roll to sense its size, or it may use contactless technology, for example an optical sensor.

In another embodiment, the sensor is configured to sense the quantity of film carried by the film dispenser by sensing the rotational speed of a film roll carried by the film dispenser. The control system may for example be configured to sense (i) the rotational speed of the film dispenser as it rotates around the bale, and (ii) the rotational speed of the film roll. The control system can then determine the quantity of film carried by the film dispenser from the relationship between those two speeds, taking into account the circumference of the bale, which determines the quantity of film dispensed per rotation of the film dispenser. This method relies on the fact that as the quantity of film carried by the film dispenser decreases, the circumference of the film roll will decrease and its rotational speed will increase relative to the rotational speed of the film dispenser.

In another embodiment, the control system is configured to determine the quantity of film carried by the film dispenser by monitoring a dispensed quantity of film and subtracting the dispensed quantity from an initial quantity of film to determine a remaining quantity of film carried by the film dispenser. The initial quantity (e.g. the amount of film carried on a new film roll) may for example be entered by an operator when fitting a new film roll, or it may be stored within the control system, so that the operator only has to tell the system that a new roll has been fitted. Alternatively, fitting of a new film roll (and/or sensing the quantity of film carried by the roll) may be sensed automatically.

The dispensed quantity may be determined for example by sensing rotation of a rotary element that rotates in response to film being dispensed from the film dispenser. The rotary element may for example be a film roll that is carried by the film dispenser, or it may be some other rotary element that rotates as film is dispensed from the film dispenser, such as a roller of a pre-tensioner mechanism. The sensor may for example be a rotary encoder that generates a signal each time the rotary element rotates.

Alternatively, the dispensed quantity may be determined by monitoring operation of the bale wrapper. For example, the control system may be configured to sense the number of bales that have been wrapped, or the number of turns of the bale wrapper, or the operating time of the bale wrapper since a new film roll was started.

The control system may be configured to increase the rotational speed of the film dispenser (i.e. the speed at which it relates around the bale) as the quantity of film carried by the film dispenser decreases. The increase in speed may be incremental (i.e. comprising two or more steps), or the speed may be increased continuously or quasi-continuously as the quantity of film carried by the film dispenser decreases. In one simple embodiment, the rotational speed of the film dispenser may be increased from a first speed to a faster second speed when the quantity of film carried by the film dispenser decreases below a threshold value.

The control system may be configured to adjust the rotational speed of the film dispenser so that rotation of the film dispenser can be halted within a predetermined stopping distance. The predetermined stopping distance is preferably no greater than the circumferential distance between the film dispenser and the obstruction sensor, so that the film dispenser can be halted before it reaches the position at which the obstruction sensor encountered an obstruction, to ensure that it does not collide with the obstruction.

In an embodiment, the obstruction sensor comprises a trigger arm that is mounted for rotation about the first axis at a predetermined distance in front of the film dispenser. Alternatively, the obstruction sensor may comprise a non-contact sensor, for example an optical, ultrasound or microwave sensor, that is configured to sense obstructions in a region in front of the film dispenser.

The bale wrapper may include a braking system that is configured to halt rotation of the film dispenser if the obstruction sensor senses an obstruction in the path of the film dispenser. The braking system may be configured to stop the drive mechanism and/or to apply a brake to stop rotation of the film dispenser.

The bale wrapper may include a bale support for supporting a bale and rotating the bale about a second axis, wherein the second axis is substantially perpendicular to the first axis. The bale support may for example comprise a platform formed by a set of rollers or a belt or belts.

The bale wrapper may include an operator interface connected to the control unit and that includes one or more controls for controlling operation of the bale wrapper. The operator interface may include a display unit that is configured to display one or more operational parameters of the bale wrapper, for example the amount of film left on the film dispenser, the number of bales that can be wrapped before the film runs out, the number of bales wrapped per film roll, and so on.

According to another aspect of the present invention there is provided a method of operating a bale wrapper comprising a film dispenser that carries a quantity of film and rotates about a first axis, the method comprising driving rotation of the film dispenser, characterised by sensing the quantity of film carried by the film dispenser, and adjusting the rotational speed of the film dispenser according to the quantity of film carried by the film dispenser.

In an embodiment, the method further comprises sensing an obstruction in the path of the film dispenser and halting rotation of the film dispenser when an obstruction is sensed.

Also disclosed is a bale wrapper comprising a table that supports a bale and rotates the bale about a first axis. The bale wrapper may include a film dispenser that carries a film roll and dispenses film from the film roll onto a surface of the bale to wrap the bale. The film dispenser may be mounted for rotation about a second axis that is substantially orthogonal to the first axis. A drive mechanism may be provided for driving rotation of the film dispenser. The bale wrapper may include a braking mechanism for braking rotation of the film dispenser. A safety mechanism may be provided, comprising a trigger element that rotates with the film dispenser and leads the film dispenser by a predetermined lead distance. The safety mechanism may be configured to activate the braking mechanism to halt rotation of the film dispenser if the trigger element encounters an obstruction. The bale wrapper may include a control system that controls the drive mechanism to adjust the rotational speed of the film dispenser, wherein the control system senses the quantity of film on the film roll and adjusts the rotational speed of the film dispenser according to the sensed value. The control system may be configured to adjust the rotational speed of the film dispenser so that it can be stopped within a stopping distance that is no greater than the lead distance.

Also disclosed is a bale wrapper comprising a film dispenser that carries a quantity of film and is mounted for rotation about a first axis, a drive mechanism for driving rotation of the film dispenser, and a control system that controls the drive mechanism, wherein the control system includes a sensor that senses the quantity of film carried by the film dispenser, and a display unit that is configured to display the quantity of film carried by the film dispenser. The display unit may for example be configured to display the amount of film left on the film dispenser, the number of bales that can be wrapped before the film runs out, the number of bales wrapped per film roll, and so on.

The control system may be configured to adjust a wrapping pattern of the bale wrapper according to the quantity of film carried by the film dispenser. For example, if the control system senses that the film has run out on one of the film dispensers, it may be configured to adjust the wrapping pattern to ensure that the bale is fully wrapped using only film from another film dispenser.

An embodiment of the invention will now be described by way of example with reference to the accompanying drawings, in which:
Figure 1 is a perspective view showing a bale wrapper approaching a bale;
Figure 2 is a perspective view showing a bale wrapper while wrapping a bale;
Figure 3 is a top view showing schematically the rotation of the wrapping arms and the trigger arms of a bale wrapper;
Figure 4 illustrates diagrammatically a control system for a bale wrapper, and
Figure 5 is a perspective view of the wrapping arms, wherein a part of the film dispenser mechanism is shown at a larger scale.

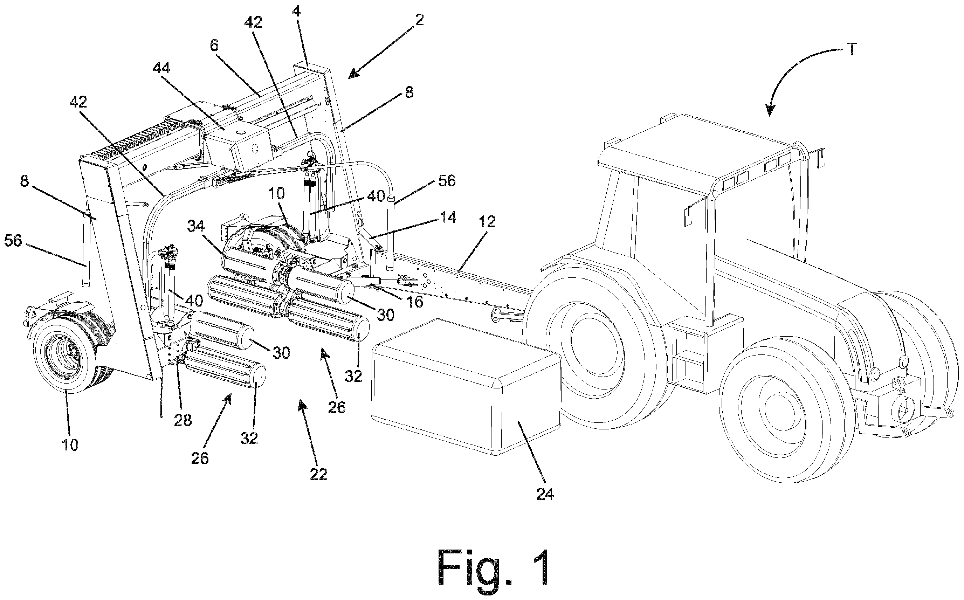

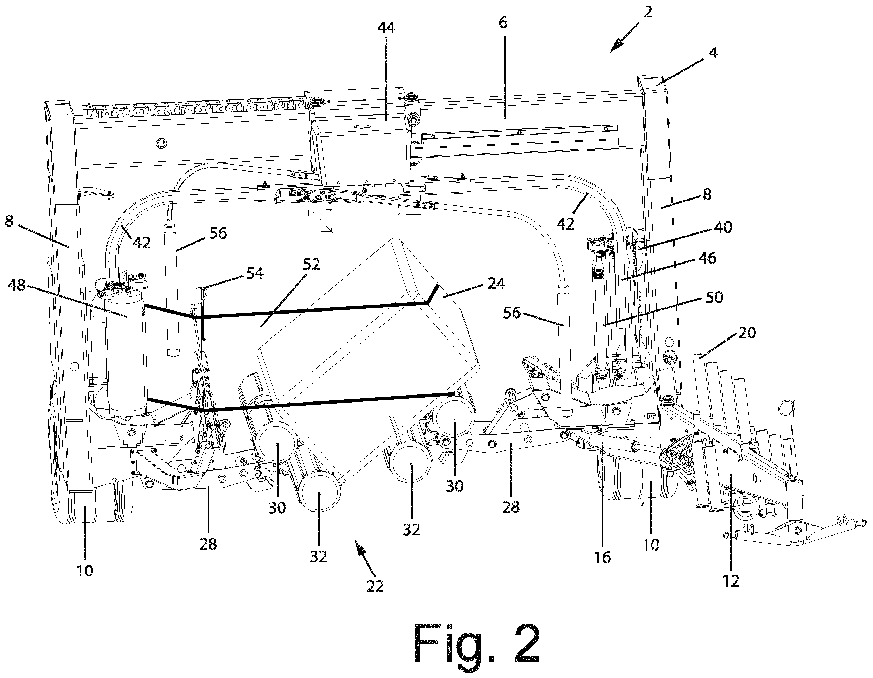

In the embodiment shown in Figures 1 and 2, the bale wrapper 2 includes an arch-shaped wheel frame 4 in the form of a portal having a cross-beam 6 and two side stanchions 8, each of which is supported by a wheel 10. Optionally, the cross-beam 6 may be in two parts that are connected telescopically, allowing the width of the portal to be reduced for road transit. A tow bar 12 may be connected to one of the stanchions 8 by a pivot 14. The angle of the tow bar 12 relative to the frame 4 may be adjustable by means of a hydraulic cylinder 16, so that the bale wrapper can be towed either directly behind a tractor T during road transit or displaced to one side thereof while operating. The tow bar 12 may include a number of carriers 20 for spare rolls of wrapping film.

The bale wrapper 2 includes a bale support assembly 22 (or "table") for supporting and rotating an agricultural bale 24 about an axis, which is generally substantially horizontal. In this example a rectangular bale is shown. It will be understood however that the bale wrapper may also be used to wrap bales of different shapes, including round bales. In this embodiment the bale support assembly 22 includes a pair of roller assemblies 26, each of which is connected to one of the side stanchions 8 by a respective swing arm assembly 28. Alternatively, the bale support assembly may comprise belts or other support elements. The swing arm assembly 28 allows the respective roller assembly 26 to be moved inwards and outwards substantially parallel to the ground (that is, substantially horizontally).

Each roller assembly 26 may include, for example, a pair of rotatable rollers comprising an upper roller 30 and a lower roller 32. Hydraulic or electric drive motors (not shown) may be provided for driving each pair of rollers 30, 32 independently in a clockwise or anti-clockwise direction.

In this embodiment, each roller 30, 32 is supported at its mid-point and the outer portion of each roller is cantilevered, the end of each roller being free. A plurality of elongate splines 34 are provided on the cylindrical surface of the roller to provide good traction to a supported bale. The rollers may alternatively have other configurations, for example they may be supported at both ends.

In this embodiment the bale wrapper 2 includes a pair of film dispensers 40 for dispensing wrapping film onto the surface of a bale. Each dispenser 40 is mounted on the end of a wrapper arm 42 that is rotatably attached to a dispenser drive mechanism 44 mounted on the cross-beam 6. The dispenser drive mechanism 44 may for example include a hydraulic motor. Each film dispenser 40 may include a support 46 for a roll of film 48 and a pre-stretching mechanism 50 for pre-stretching the film 52 as it is drawn from the roll 48, before it is applied to the bale 24. The film dispenser 40 and pre-stretching mechanism 50 may be conventional, and may for example be substantially as described in EP2156728B1, and so will not be described in detail.

The bale wrapper may also include a pair of film cutters 54 for cutting the film 52 after it has been applied to the bale 24, so that the wrapped bale 24 can be deposited on the ground and wrapping of a new bale can commence. The structure and operation of the film cutters 54 is conventional, and may for example be substantially as described in EP2798946B1, and will not be described in detail.

A safety mechanism that halts operation of the bale wrapper if it senses an obstruction in the path of the rotating film dispenser 40 is associated with each film dispenser 40. In this embodiment the safety mechanism includes an obstructions sensor comprising a lightweight trigger arm 56 that is pivotally connected to the associated wrapper arm 42. The trigger arm 56 is mounted in front of the respective wrapper arm 42 in the direction of rotation. As the film dispenser 40 rotates the trigger arm 56 and the film dispenser follow the same rotary path with the trigger arm 56 leading the film dispenser, usually by a distance of about 70cm. The safety mechanism is designed so that the stopping distance of the film dispenser is equal to or less than the distance between the trigger arm 56 and the wrapper arm 42, to ensure that when the trigger arm 56 encounters an obstruction, the safety mechanism is activated to halt rotation of the film dispenser, ensuring that it does not collide with the obstruction.

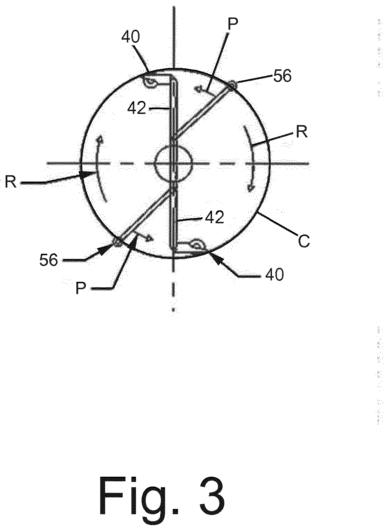

Operation of the safety mechanism is illustrated schematically in figure 3, where the direction of rotation of the wrapping arms 42 and the film dispensers 40 is shown by arrows R, and the pivoting direction of the trigger arms 56 is shown by arrows P. The circular path C of the film dispensers 40 and the trigger arms 56 is also shown.

Operation of the safety mechanism will now be described. If the trigger arm 56 hits an obstruction it pivots backwards relative to the wrapper arm 42. This pivoting movement is sensed by a sensor, for example a switch, which activates a braking mechanism to halt rotation of the wrapper arm 42 before the film dispenser 40 reaches the position of the obstruction. This prevent the film dispenser from colliding with the obstruction and reduces the risk of damage to the obstruction or the bale wrapper, or injury to a person or animal. At the same time the trigger arm 56 pivots relative to the wrapper arm 42 so that it does not transmit a large force to the obstruction.

If the drive mechanism 44 for the wrapper arms 42 comprises a hydraulic motor (which is usually the case), the braking mechanism may include a hydraulic brake. The hydraulic brake may consist for example of a shut-off valve that prevents hydraulic fluid flowing from the motor to halt rotation of the motor, and an anti-shock relief valve that opens at a predetermined pressure to prevent damage to the hydraulic system while still bringing the motor rapidly to a halt. Alternatively or in addition a mechanical friction brake may be provided, which may consist for example of an electrically-actuated disc brake. The hydraulic brake and/or the mechanical friction brake are activated when the trigger arm 56 encounters an obstruction, quickly bringing rotation of the wrapper arms 42 to a stop.

The bale wrapper may optionally include a film sensor that is configured to sense the quantity of film carried by the film dispenser. This quantity may be sensed directly, for example by sensing the weight or diameter or radius of the film roll, or it may be sensed or monitored indirectly, for example by sensing the number of rotations of the film roll or of the stretching device since a new film roll was started, or the rotational speed of the film roll, or by monitoring the number of bales wrapped since a new film roll was started.

In one example, the film sensor comprises a load sensor, for example a strain gauge, that is configured to sense either the total weight of the film dispenser (including the weight of the film roll carried by the film dispenser), or the weight of the film roll. This allows the quantity of film carried by the film dispenser to be determined directly.

Alternatively, the film sensor may be configured to sense the diameter of the film roll, for example by using a mechanical contact measurement device or an optical sensor. The quantity of film carried by the film dispenser can then be determined from the size of the film roll, optionally taking account also of the height of the roll.

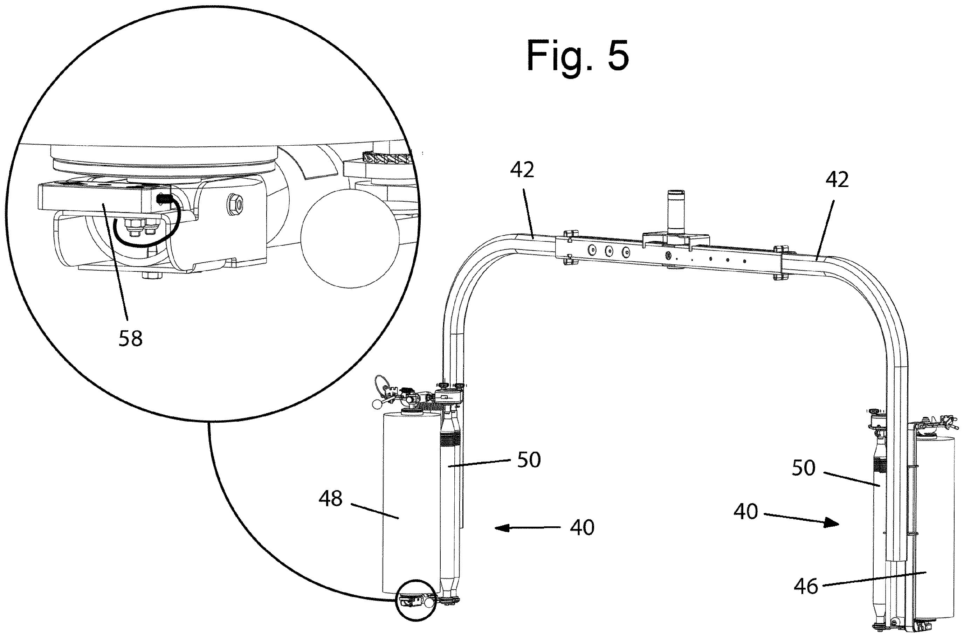

Alternatively, the quantity of film carried by the film dispenser may be sensed indirectly, for example by sensing the speed of rotation of the film roll as the film is dispensed. For example, as illustrated in Fig. 5, each film dispenser 40 may include a rotation sensor 58 that senses the speed of rotation of the film roll 48. The rotation sensor 58 may for example be a rotary encoder. Because the rotational speed of the film roll increases as the diameter of the film roll decreases (assuming that film is drawn from the roll at a steady speed), the rotational speed of the film roll is inversely related to the diameter of the film roll.

More specifically, the speed at which film is drawn from the film roll is related to the rotational speed of the film dispenser around the bale and the circumference of the bale. For example, in the case of a round bale with a diameter of 1.3m and a width of 1.2m, the length of stretched film applied to the surface of the bale per rotation of the film dispenser will be 1.3+1.2+1.3+1.2 = 5m. The length L of unstretched film drawn from the film roll per rotation of the film dispensers will be equal to the length of stretched film applied to the bale divided by the stretch ratio. This length L is related to the diameter D of the film roll by the equation L=N.πD where N is the number of rotations of the film roll. Therefore, if the size of the bale and the stretch ratio of the film are known, the diameter of the film roll can be determined from the number of turns of the film roll per rotation of the film dispenser.

Alternatively, the quantity of film carried by the film dispenser can be determined or estimated by noting when a new film roll is started and counting either the number of rotations of the film roll, or the number of rotations of the pre-stretching mechanism, or the number of bales that have been wrapped using that film roll. In one embodiment, the bale wrapper has a shaft encoder that senses rotation of the pre-stretching mechanism and provides a digital signal that represents the number of rotations of the pre-stretching mechanism. This sensor signal may be used to determine the length of film that has been dispensed from the film roll, thus allowing the quantity of film still carried by the film dispenser to be determined. This sensor may also be used for sensing breakage of the film during a bale wrapping operation.

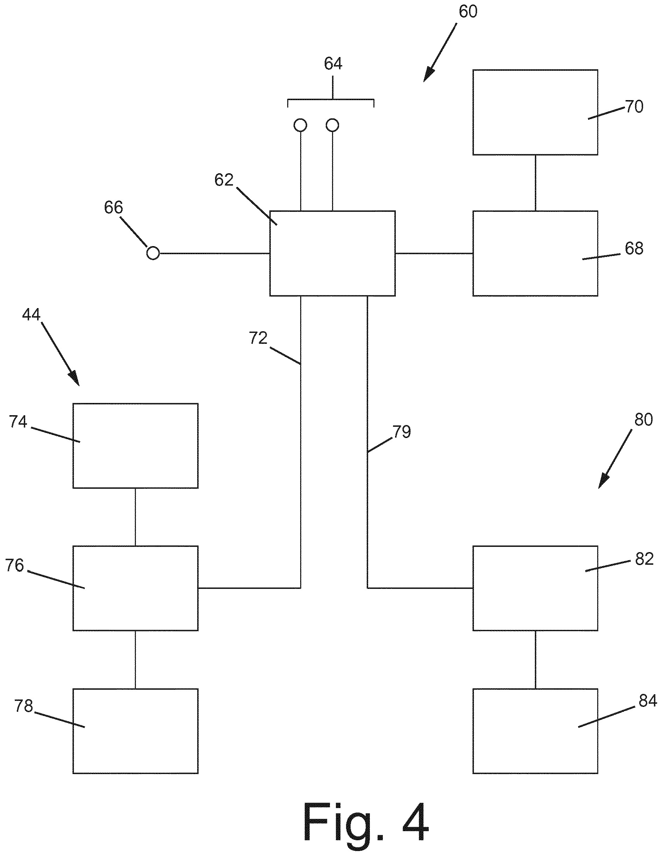

The bale wrapper may include a control system that controls operation of the bale wrapper according to signals received from the sensor that senses the quantity of film carried by the film dispenser. The control system may also control operation of the braking system when one of the trigger arms 56 is triggered, and/or other operations of the bale wrapper. An example of a control system is shown in figure 4.

In this embodiment, the control system 60 includes a control unit 62 that may optionally be connected to receive sensor signals from one or more film sensors 64, which sense the quantity of film carried by the film dispenser. These film sensors 64 may be of any of the types described above. For example, in a typical configuration, the control system 60 may be connected to receive sensor signals from two film sensors 64, each of which is associated with a separate film dispenser.

Alternatively, the control system 60 may be configured to determine or estimate the quantity of film carried by the film dispenser as described above.

The control unit 62 may also be connected to receive signals from one or more obstruction sensors 66, which sense an obstruction in the path of the rotating film dispensers. The obstruction sensors 66 may for example be switches that are activated when one of the trigger arms comes into contact with an obstruction, or non-contact sensors that sense an obstruction using for example a light beam.

The control system 60 may also optionally include an operator interface 68 and a display unit 70 connected to the control unit 62, which may be used by an operator to control and monitor operation of the bale wrapper. For example, the operator interface 68 may allow an operator to inform the control system when a new roll of wrapping film has been started, so that by monitoring the amount of film dispensed the control system can determine the amount of film remaining on the roll. The operator may also enter information about the film roll, for example the mass of the roll or the length of film carried on the roll. The operator interface 68 may also allow an operator to enter certain control parameters, such as the maximum rotational speed of the wrapping arms 42. The display unit 70 may allow the operator to see useful operational parameters, such as the length of film remaining on the film roll, the number of bales that can be wrapped before the film runs out, or the number of bales wrapped per roll.

The control unit 62 has an output connection 72, which is connected to the drive mechanism 44 that drives rotation of the wrapper arm 42 or arms, and is configured to control the rotational speed of the wrapper arms 42. For example, the drive mechanism 44 may include a hydraulic drive pump 74, a set of hydraulic control valves 76 and a hydraulic drive motor 78. The control unit 62 may be configured to control the rotational speed of the drive mechanism 44 via the control valves 76 according to signals received from the film sensors 64, or according to the determined quantity of film carried by the film dispensers 60. The control unit 62 may also be configured to halt the drive mechanism 44 if an obstruction sensor 66 senses an obstruction in the path of the film dispenser 40.

The control unit 62 may also be connected by control line 79 to a brake mechanism 80 that is configured to halt rotation of the film dispenser 40 if an obstruction sensor 66 senses an obstruction in the path of the film dispenser. The brake mechanism may for example include an electrical servo 82 that operates a mechanical friction brake 84, for example a disc brake.

In order to wrap a bale 24, the bale wrapper 2 is first drawn up to the bale so that the frame 4 straddles the bale. The swing arm assemblies 28, which are initially retracted outwards, are then moved inwards so that the roller assemblies 26 engage the sides of the bale 24. The rollers 30, 32 are rotated by the hydraulic motors so that the inner portion of each roller rotates upwards, thereby lifting the bale 24. At the same time, the swing arm assemblies 28 are moved further inwards, so that the roller assemblies 26 then support the bale 24 from below, as shown in Figure 2.

Once the bale has been lifted to this supported position, the ends of the wrapping film 52 are fed from the film cutters 54 and the dispensers 40 and attached to the surface of the bale 24. The rollers 30, 32 are then rotated in the same direction (clockwise or anti-clockwise), causing the bale 24 to rotate about a substantially horizontal axis. At the same time, the dispensers 40 rotate about the vertical axis of the dispenser drive mechanism 44, thereby applying a series of overlapping layers of film to the surface of the bale. This continues until the entire surface of the bale has been wrapped with one or more layers of film. Once wrapping has been completed, the film 52 is severed by the film cutters 54 and the swing arm assemblies 28 are withdrawn outwards to deposit the wrapped bale on the ground. The process is then repeated with another bale.

If the trigger arm 56 hits an obstruction it pivots backwards relative to the wrapper arm 42. This pivoting movement is sensed by an obstruction sensor 66, for example a switch, which sends a signal to the control unit 62, indicating the presence of an obstruction. Alternatively, a signal indicating the presence of an obstruction may be generated by a non-contact sensor. Upon receiving such a signal the control unit 62 activates a braking mechanism to halt rotation of the wrapper arm 42 before the film dispenser 40 reaches the position of the obstruction. This prevent the film dispenser from colliding with the obstruction and reduces the risk of damage either to the obstruction or the bale wrapper, or injury to a person or animal. At the same time the trigger arm 56, if provided, pivots relative to the wrapper arm 42 so that it does not transmit a large force to the obstruction.

Various modifications of the invention are of course possible. For example, the invention may be embodied either in a dedicated bale wrapper or a combined baler/wrapper machine, and it may be employed in a bale wrapper that can be used to wrap either a square bale or a round bale of agricultural material.

Also disclosed is a film dispenser that carries a quantity of film and is mounted for rotation about a first axis, a drive mechanism for driving rotation of the film dispenser, and a control system that controls the drive mechanism, wherein the control system includes a sensor that senses the quantity of film carried by the film dispenser, and a display unit that is configured to display the quantity of film carried by the film dispenser. The display unit may for example be configured to display the amount of film left on the film dispenser, the number of bales that can be wrapped before the film runs out, the number of bales wrapped per film roll, and so on.

## Claims

1. A bale wrapper (2) comprising a film dispenser (40) that carries a quantity of film (52) and is mounted for rotation about a first axis, a drive mechanism (44) for driving rotation of the film dispenser (40), an obstruction sensor (66) configured to halt rotation of the film dispenser (40) if it senses an obstruction in the path of the film dispenser (40), and a control system (60) that controls the drive mechanism (44) to adjust the rotational speed of the film dispenser (40),
**characterised in that**,
the control system (60) is configured to adjust the rotational speed of the film dispenser (40) according to the quantity of film (52) carried by the film dispenser (40).

2. A bale wrapper (2) according to claim 1, wherein the control system (60) includes a sensor (64) configured to sense the quantity of film (52) carried by the film dispenser (40), and
optionally wherein the sensor senses (i) the mass of the film (52) carried by the film dispenser (40) or (ii) the size of a film roll (48) carried by the film dispenser (40).

3. A bale wrapper (2) according to claim 1, wherein the control system (60) includes a sensor (58) configured to sense the rotational speed of a film roll (48) carried by the film dispenser (40).

4. A bale wrapper (2) according to claim 1, wherein the control system (60) is configured to determine the
quantity of film (52) carried by the film dispenser (40) by monitoring a dispensed quantity of film (52) and subtracting the dispensed quantity from an initial quantity of film (52) to determine a remaining quantity of film carried by the film dispenser (40).

5. A bale wrapper (2) according to claim 4, wherein the dispensed quantity is determined by (i) sensing rotation of a rotary element that rotates in response to film (52) being dispensed from the film dispenser (40) or (ii) monitoring operation of the bale wrapper (2).

6. A bale wrapper (2) according to any one of the preceding claims, wherein the control system (60) is configured to increase the rotational speed of the film dispenser (40) as the quantity of film (52) carried by the film dispenser (40) decreases.

7. A bale wrapper (2) according to any one of the preceding claims, wherein the control system (60) is configured to adjust the rotational speed of the film dispenser (40) so that rotation of the film dispenser (40) can be halted within a predetermined stopping distance.

8. A bale wrapper (2) according to any one of the preceding claims, wherein the obstruction sensor (66) comprises a trigger arm (56) that is mounted for rotation about the first axis at a predetermined distance in front of the film dispenser (40).

9. A bale wrapper (2) according to any one of the preceding claims, including a braking system that is configured to halt rotation of the film dispenser (40) if the obstruction sensor (66) senses an obstruction in the path of the film dispenser.

10. A bale wrapper (2) according to any one of the preceding claims, including a bale support (22) for supporting a bale and rotating the bale about a second axis, wherein the second axis is substantially perpendicular to the first axis.

11. A bale wrapper (2) according to any one of the preceding claims, the control system (60) including an operator interface (68) comprising one or more controls for controlling operation of the bale wrapper, and optionally wherein the operator interface includes a display unit (70) that is configured to display one or more operational parameters of the bale wrapper.

12. A method of operating a bale wrapper (2) comprising a film dispenser (40) that carries a quantity of film (52) and rotates about a first axis, the method comprising driving rotation of the film dispenser (40),
**characterised by**,
sensing the quantity of film (52) carried by the film dispenser (40), and adjusting the rotational speed of the film dispenser (40) according to the quantity of film (52) carried by the film dispenser (40).

13. A method according to claim 12, further comprising sensing an obstruction in the path of the film dispenser (40) and halting rotation of the film dispenser (40) when an obstruction is sensed.

## Patentansprüche

1. Ein Ballenwickler (2), der Folgendes beinhaltet: einen Folienabroller (40), der eine Menge an Folie (52) trägt und zur Drehung um eine erste Achse montiert ist, einen Antriebsmechanismus (44) zum Antreiben der Drehung des Folienabrollers (40), einen Hindernissensor (66), der konfiguriert ist, um die Drehung des Folienabrollers (40) anzuhalten, wenn er ein Hindernis in dem Weg des Folienabrollers (40) wahrnimmt, und ein Steuersystem (60), das den Antriebsmechanismus (44) steuert, um die Drehgeschwindigkeit des Folienabrollers (40) einzustellen,
**dadurch gekennzeichnet, dass**
das Steuersystem (60) konfiguriert ist, um die Drehgeschwindigkeit des Folienabrollers (40) gemäß der Menge an Folie (52), die durch den Folienabroller (40) getragen wird, einzustellen.

2. Ballenwickler (2) gemäß Anspruch 1, wobei das Steuersystem (60) einen Sensor (64) umfasst, der konfiguriert ist, um die Menge an Folie (52), die durch den Folienabroller (40) getragen wird, wahrzunehmen, und
wobei der Sensor optional Folgendes wahrnimmt: (i) die Masse der Folie (52), die durch den Folienabroller (40) getragen wird, oder (ii) die Größe einer Folienrolle (48), die durch den Folienabroller (40) getragen wird.

3. Ballenwickler (2) gemäß Anspruch 1, wobei das Steuersystem (60) einen Sensor (58) umfasst, der konfiguriert ist, um die Drehgeschwindigkeit einer Folienrolle (48), die durch den Folienabroller (40) getragen wird, wahrzunehmen.

4. Ballenwickler (2) gemäß Anspruch 1, wobei das Steuersystem (60) konfiguriert ist, um durch das Überwachen einer gespendeten Menge an Folie (52) und das Subtrahieren der gespendeten Menge von einer anfänglichen Menge an Folie (52), um eine verbleibende Menge an Folie, die durch den Folienabroller (40) getragen wird, zu bestimmen, die Menge an Folie (52), die durch den Folienabroller (40) getragen wird, zu bestimmen.

5. Ballenwickler (2) gemäß Anspruch 4, wobei die gespendete Menge durch Folgendes bestimmt wird: (i) Wahrnehmen der Drehung eines Drehelements, das sich als Reaktion darauf dreht, dass Folie (52) von dem Folienabroller (40) gespendet wird, oder (ii) Überwachen des Betriebs des Ballenwicklers (2).

6. Ballenwickler (2) gemäß einem der vorhergehenden Ansprüche, wobei das Steuersystem (60) konfiguriert ist, um die Drehgeschwindigkeit des Folienabrollers (40) in dem Maße zu erhöhen, wie die Menge an Folie (52), die durch den Folienabroller (40) getragen wird, abnimmt.

7. Ballenwickler (2) gemäß einem der vorhergehenden Ansprüche, wobei das Steuersystem (60) konfiguriert ist, um die Drehgeschwindigkeit des Folienabrollers (40) so einzustellen, dass die Drehung des Folienabrollers (40) innerhalb eines vorbestimmten Bremswegs angehalten werden kann.

8. Ballenwickler (2) gemäß einem der vorhergehenden Ansprüche, wobei der Hindernissensor (66) einen Auslöserarm (56) beinhaltet, der zur Drehung um die erste Achse in einem vorbestimmten Abstand vor dem Folienabroller (40) montiert ist.

9. Ballenwickler (2) gemäß einem der vorhergehenden Ansprüche, der ein Bremssystem umfasst, das konfiguriert ist, um die Drehung des Folienabrollers (40) anzuhalten, wenn der Hindernissensor (66) ein Hindernis in dem Weg des Folienabrollers wahrnimmt.

10. Ballenwickler (2) gemäß einem der vorhergehenden Ansprüche, der eine Ballenstütze (22) zum Stützen eines Ballens und Drehen des Ballens um eine zweite Achse umfasst, wobei die zweite Achse im Wesentlichen senkrecht zu der ersten Achse ist.

11. Ballenwickler (2) gemäß einem der vorhergehenden Ansprüche, wobei das Steuersystem (60) eine Bedieneroberfläche (68) umfasst, die ein oder mehrere Steuerelemente zum Steuern des Betriebs des Ballenwicklers beinhaltet, und wobei die Bedieneroberfläche optional eine Anzeigeeinheit (70) umfasst, die konfiguriert ist, um einen oder mehrere Betriebsparameter des Ballenwicklers anzuzeigen.

12. Ein Verfahren zum Betreiben eines Ballenwicklers (2), der einen Folienabroller (40) beinhaltet, der eine Menge an Folie (52) trägt und sich um eine erste Achse dreht, wobei das Verfahren das Antreiben der Drehung des Folienabrollers (40) beinhaltet, **gekennzeichnet durch**
das Wahrnehmen der Menge an Folie (52), die durch den Folienabroller (40) getragen wird, und das Einstellen der Drehgeschwindigkeit des Folienabrollers (40) gemäß der Menge an Folie (52), die durch den Folienabroller (40) getragen wird.

13. Verfahren gemäß Anspruch 12, das ferner das Wahrnehmen eines Hindernisses in dem Weg des Folienabrollers (40) und das Anhalten der Drehung des Folienabrollers (40), wenn ein Hindernis wahrgenommen wird, beinhaltet.

## Revendications

1. Une enrubanneuse (2) comprenant un distributeur de film (40) qui porte une quantité de film (52) et est monté pour effectuer une rotation autour d'un premier axe, un mécanisme d'entraînement (44) pour entraîner le distributeur de film (40) en rotation, un capteur d'obstruction (66) configuré pour stopper la rotation du distributeur de film (40) s'il détecte une obstruction sur le chemin du distributeur de film (40), et un système de commande (60) qui commande le mécanisme d'entraînement (44) afin de régler la vitesse de rotation du distributeur de film (40),
**caractérisée en ce que**,
le système de commande (60) est configuré pour régler la vitesse de rotation du distributeur de film (40) en fonction de la quantité de film (52) portée par le distributeur de film (40).

2. Une enrubanneuse (2) selon la revendication 1, dans laquelle le système de commande (60) comporte un capteur (64) configuré pour détecter la quantité de film (52) portée par le distributeur de film (40), et dans laquelle, éventuellement, le capteur détecte (i) la masse du film (52) porté par le distributeur de film (40) ou (ii) la taille d'un rouleau de film (48) porté par le distributeur de film (40).

3. Une enrubanneuse (2) selon la revendication 1, dans laquelle le système de commande (60) comporte un capteur (58) configuré pour détecter la vitesse de rotation d'un rouleau de film (48) porté par le distributeur de film (40).

4. Une enrubanneuse (2) selon la revendication 1, dans laquelle le système de commande (60) est configuré pour déterminer la quantité de film (52) portée par le distributeur de film (40) en surveillant une quantité de film (52) distribuée et en soustrayant la quantité distribuée d'une quantité de film (52) initiale afin de déterminer une quantité de film restante portée par le distributeur de film (40).

5. Une enrubanneuse (2) selon la revendication 4, dans laquelle la quantité distribuée est déterminée (i) en détectant la rotation d'un élément rotatif qui tourne en réponse au fait que du film (52) est distribué à partir du distributeur de film (40) ou (ii) en surveillant le fonctionnement de l'enrubanneuse (2).

6. Une enrubanneuse (2) selon l'une quelconque des revendications précédentes, dans laquelle le système de commande (60) est configuré pour augmenter la vitesse de rotation du distributeur de film (40) à mesure que la quantité de film (52) portée par le distributeur de film (40) diminue.

7. Une enrubanneuse (2) selon l'une quelconque des revendications précédentes, dans laquelle le système de commande (60) est configuré pour régler la vitesse de rotation du distributeur de film (40) de sorte que la rotation du distributeur de film (40) puisse être stoppée dans les limites d'une distance d'arrêt prédéterminée.

8. Une enrubanneuse (2) selon l'une quelconque des revendications précédentes, dans laquelle le capteur d'obstruction (66) comprend un bras de déclenchement (56) qui est monté pour effectuer une rotation autour du premier axe à une distance prédéterminée devant le distributeur de film (40).

9. Une enrubanneuse (2) selon l'une quelconque des revendications précédentes, comportant un système de freinage qui est configuré pour stopper la rotation du distributeur de film (40) si le capteur d'obstruction (66) détecte une obstruction sur le chemin du distributeur de film.

10. Une enrubanneuse (2) selon l'une quelconque des revendications précédentes, comportant un support de balle (22) destiné à supporter une balle et à faire tourner la balle autour d'un deuxième axe, le deuxième axe étant substantiellement perpendiculaire au premier axe.

11. Une enrubanneuse (2) selon l'une quelconque des revendications précédentes, le système de commande (60) comportant une interface pour opérateur (68) comprenant une ou plusieurs commandes destinées à commander le fonctionnement de l'enrubanneuse, et dans laquelle, éventuellement, l'interface pour opérateur comporte une unité d'affichage (70) qui est configurée pour afficher un ou plusieurs paramètres opérationnels de l'enrubanneuse.

12. Un procédé pour faire fonctionner une enrubanneuse (2) comprenant un distributeur de film (40) qui porte une quantité de film (52) et tourne autour d'un premier axe, le procédé comprenant le fait d'entraîner le distributeur de film (40) en rotation, **caractérisé par**,
le fait de détecter la quantité de film (52) portée par le distributeur de film (40), et de régler la vitesse de rotation du distributeur de film (40) en fonction de la quantité de film (52) portée par le distributeur de film (40).

13. Un procédé selon la revendication 12, comprenant en outre le fait de détecter une obstruction sur le chemin du distributeur de film (40) et de stopper la rotation du distributeur de film (40) lorsqu'une obstruction est détectée.
